# EUROPEAN PATENT SPECIFICATION

(11) **EP 3 303 230 B1**
(45) Date of publication and mention of the grant of the patent: **26.08.2020**
(21) Application number: 16744890.1
(22) Date of filing: 26.05.2016
(51) Int. Cl.: C02F 11/12, B65D 88/16, F26B 5/14

(54) **ELONGATE FLEXIBLE CONTAINER**
LÄNGLICHER FLEXIBLER BEHÄLTER
RÉCIPIENT SOUPLE ALLONGÉ

(30) Priority: 26.05.2015 NL 2014856
(43) Date of publication of application: 11.04.2018
(73) Proprietor: TenCate Geosynthetics Netherlands B.V., 7442 AE Nijverdal (NL)
(72) Inventor: TER HARMSEL, Mink, 7442 AE Nijverdal (NL); VAN DEN BERG, Gijsbertus Johannes, 7442 AE Nijverdal (NL); WESSELS, Hendrik, 7442 AE Nijverdal (NL); ZENGERINK, Edwin Lambertus Franciscus, 7442 AE Nijverdal (NL)
(74) Representative: Nederlandsch Octrooibureau
(86) International application number: PCT/NL2016/050374
(87) International publication number: WO 2016/190738

(56) References cited:
- US-A1- 2006 102 565
- Anonymous: "Aanvoer zandzakjes bij overstroming te Kallo | Erfgoedbank Waasland", , 1 January 1953 (1953-01-01), XP055228635, Retrieved from the Internet: URL:http://www.waaserfgoed.be/virtuele-ten toonstellingen/de-potige-polders/127-overt roming/overzicht/8273-aanvoer-zandzakjes-b ij-overstroming-te-kallo [retrieved on 2015-11-16]

## Description

The invention relates to an elongate flexible container, for example for solid liquid separation and/or dewatering and/or consolidation, said container comprising at least one filling opening for filling the container with a material, for example a material to be separated and/or dewatered and/or consolidated.

Such a container is for example known from US2006/0102565 A1, WO-A1-97/29246 and WO-A1-02068086 and is for example known by the trademarks Geotube® or Geocontainer® of the applicant. In WO-A1-97/29246 each filling opening is arranged in the container by cutting a hole in the container, which hole defines the filling opening. A supply tube is joined to the container in an area surrounding said hole, which supply tube connects to the filling opening. For filling the container a fill pipe of a filling means is inserted in said supply tube, via which fill pipe material is pumped or fed into the container. After filling the container the fill pipe of the filling means is removed and the filling opening of the container is closed by closing the supply tube. The supply tube may for example be closed by making a knot in the supply tube or by putting a closing means around the supply tube, which is normally done manually.

It is an object of the invention to improve the container disclosed in WO-A1-97/29246 and WO-A1-02068086. For example, it may be an object of the invention to increase the strength of the container disclosed in WO-A1-97/29246 and WO-A1-02068086 in the area of the filling opening. For example, it may be an additional or alternative object of the invention to enhance the closing of the filling opening of the container disclosed in WO-A1-97/29246 and WO-A1-02068086.

At least one object may be achieved by a container according to the preamble, wherein said container comprises at least two elongate container parts, which container parts are joined to each other over a circumferential seam, and wherein the at least one filling opening is arranged between the two container parts by locally not (directly) joining the two container parts to each other by said circumferential seam in a filling opening area.

By arranging the filling opening between the two container parts by locally not or not directly joining the two container parts to each other, thereby leaving an opening, no hole has to be made in the fabric of the container. This enhances the strength of the container in the area surrounding or near the filling opening, as no cuts are made in the container for making the opening.

It is noted that in said filling opening area the two container parts may not be connected to each other, thereby defining the opening there between. Alternatively, the two container parts may be connected to each other in an indirect manner, for example by connecting the two container parts to each other with use of at least one intermediate material insert, wherein the filling opening may be arranged in the material insert.

It is further noted that the at least two container parts that are joined to each other are provided in line with each other.

In particular, the at least two container parts are provided in line with each other as seen in a longitudinal direction of the container parts. The circumferential seam extends substantially orthogonal to the longitudinal direction of the container parts.

Each container part may comprise a longitudinal seam for forming said container part. Said container part may in that case be formed out of a sheet like material, wherein two opposing end zones of the sheet like material are joined to each other over a said longitudinal seam, such that a tubular member is formed. The circumferential seam that is used for joining two container parts extends substantially orthogonal to the optionally provided longitudinal seam of one container part.

During and after filling the container with material a circumferential tension acts on the container. This circumferential tension may pull the two container parts in an outward, transverse direction with respect to the longitudinal direction of the container, thereby bringing the two container parts together and at least substantially closing off the filling opening defined there between upon removal of the fill pipe of the filling means. This may result in an automatic and/or quick closure of the filling opening.

The maximum size of the filling opening may easily be chosen by choosing the length over which the two container parts are locally not (directly) joined.

The material may be any material to be separated and/or dewatered and/or consolidated. For example said material may comprise loose or little coherent (solid) material, such as sand, silt, clay, mud or other ground material, or any other (granular) material

It is noted that the container may comprise in particular more than two container parts. By providing more parts, the length of the container may be increased and/or chosen as desired. Each container part is connected to an adjacent container part by a said circumferential seam. Between each pair of adjacent container parts a said filling opening may be provided, or only between some pairs of adjacent container parts of the total number of pairs. For example, each container part may have a length of approximately 5 m, wherein a filling opening may be provided in each or every second or third successive seam. For example in total ten container parts may be connected, providing a container of approximately 50 m in total, in which a maximum of nine filling openings may be provided between each pair of adjacent container parts.

In an embodiment of the container according to the invention the two container parts overlap each other over a certain overlapping length and said circumferential seam is provided over said overlapping length.

By providing slightly overlapping container parts that overlap over said overlapping length, the closing of the filling opening upon removal of the fill pipe of the filling means is enhanced, because the overlapping parts are pulled onto each other as a result of the circumferential tension. Said overlapping length may be chosen as desired, for example between 2 - 10 cm.

According to the invention, said container comprises at least one material insert joined to said container parts in said filling opening area, said material insert defining said at least one filling opening.

Such at least one material insert increases the strength of the container in the filling opening area and/or closes of the area surrounding the filling opening.

By locally not joining the container parts by said circumferential seam for leaving said filling opening, an elongate filling opening is provided. If a fill pipe of the filling means is inserted in such a elongate filling opening, the two container parts are driven apart from each other, in which condition the shape of the filling opening resembles the shape of an eye in which the fill pipe is the iris. In the area surrounding the fill pipe where the container parts are driven apart, the at least one material insert may be provided, thereby closing off the area surrounding the fill pipe that would otherwise be left open and through which area otherwise material could leak. In particular when wastewater or mud is the material that is fed into the container this is important, because such material tends to wash out via such an open area. Further, said at least one material insert may absorb the forces acting on the seam between the two container parts thereby protecting the seam from being torn.

In said material insert an opening is provided, which opening is the filling opening.

In an embodiment of the container according to the invention, said container comprises a supply tube connected to the filling opening.

Such a supply tube is known per se and may be used for inserting the fill pipe of the filling means.

The supply tube may for example be joined to the container, to the container parts or to the material insert.

Said known supply tube extends outwards of said container. In accordance with the invention the supply tube may extend inwards and/or outwards of said container.

A supply tube extending inwards in said container has the advantage that during filling of the container the material that is present in the container at the outside of the supply tube will press the supply tube against the fill pipe, thereby closing off the space between the fill pipe and the supply tube such that material is prevented from leaking out of said supply tube. Furthermore, upon removing said fill pipe of said filling means, the material present in the container at the outside of the supply tube will press against the supply tube, thereby pressing opposite parts of the supply tube together and thereby closing the supply tube. As such, the inwardly extending supply tube offers the advantage of closing the supply tube easily and/or quickly and/or automatically.

This effect of the inward extending supply tube being closed by the pressure of the material may be used either separately or in combination with the closing of the filling opening as a result of the circumferential tension of the container. The combined effect may provide a good and/or strong closing of the filling opening and/or the supply tube and/or an effective means against leakage of material outside of the container.

In another embodiment of the container according to the invention said container is made of a liquid permeable material.

The invention further relates to a use of a container according to any of the claims 1 - 4 for solid liquid separation and/or dewatering and/or consolidation.

After filling of the container with said material the container may be used as a core or base of a dam, or for filling holes or trenches, or as landfill, or as an infill to elevate or renovate sports fields, park meadows or other infrastructure and landscaping elements, or as a quay, a bank reinforcement, a dike, a reclamation dike, a jetty, a breakwater, a tidal energy enclosure structure, or as an off shore storm surge protection structure, e.g. in the bed of a waterway, after filling of the container with said material.

The invention also relates to a structure, such as a dam, or for filling holes or trenches, or as landfill, or as an infill to elevate or renovate sports fields, park meadows or other infrastructure and landscaping elements, or a quay, a bank reinforcement, a dike, a reclamation dike, a jetty, a breakwater, a tidal energy enclosure structure, or an off shore storm surge protection structure, comprising at least one container according to any of the claims 1 - 4.

The invention also relates to a method of using an elongate flexible container according to any of the claims 1 - 4, for example for solid liquid separation and/or dewatering and/or consolidation, said method comprising the steps of:
(a) providing a container according to any of the claims 1 - 4;
(b) arranging a fill pipe of a filling means in said at least one filling opening, and optionally in said supply tube;
(c) supplying a flow of material, for example by means of pumping, in said container via said fill pipe of said filling means, and
(d) removing said fill pipe of said filling means.

In an embodiment of the method according to the invention during or after step (d) said at least one filling opening is substantially closed by a circumferential tension in the container.

As described above, this embodiment of the method according to the invention provides the advantage of closing the filling opening easily and/or quickly and/or automatically by the circumferential tension of the container.

In another embodiment of the method according to the invention, in step (a) a container of at least claim 3 is provided, and wherein during or after step (d) said supply tube is substantially closed by material present in the container at the outside of an inward extending part of said supply tube.

As described above, this embodiment of the method according to the invention provides the advantage of closing the supply tube easily and/or quickly and/or automatically by said material pressing against the supply tube and thereby closing the supply tube.

The invention also relates to a method for producing an elongate flexible container according to any of the claims 1 - 4, comprising the steps of:
(a) providing at least two elongate container parts;
(b) joining said at least two container parts to each other over a circumferential seam while leaving a filling opening between the two container parts by locally not (directly) joining the two container parts to each other by said circumferential seam in a filling opening area;
(c) providing at least one material insert, which material insert defines said at least one filling opening;
(d) attaching said material insert to said container parts in said filling opening area.

In said material insert an opening or hole is made, said opening defining said filling opening.

In another embodiment of the method according to the invention the method comprises the further steps of:
(e) providing a supply tube;
(f) attaching said supply tube to said container parts or said material insert, such that said supply tube connects to said filling opening.

As described above, said supply tube may extend inwards and/or outwards of said container.

In a preferred embodiment of the method according to the invention, the method may be characterized in that:
wherein in step (e) the supply tube is provided in a folded state, such that said supply tube has two supply tube parts extending in an at least partly overlapping manner from a fold line, wherein one of said supply tube parts is an inner supply tube part extending inside in the other, outer supply tube part;
wherein step (f) is performed by attaching the fold line of said supply tube to said container parts or said material insert;
and comprising the step of:
   (g) pulling the inner supply tube part out of the outer supply tube part.

An advantage of this preferred embodiment is that the supply tube may easily be attached to the container parts or the material insert in the area of the fold line thereof, wherein after attaching the supply tube to the container parts or the material insert the inner supply tube part may easily be pulled out of the outer supply tube part for forming a supply tube that extends both inwards and outward of said container.

Preferably said supply tube is attached to the container parts or material insert in such a manner, that in the folded state of the supply tube both supply tube parts extend inwards in said container. The inner supply tube part may then easily be pulled outwards of said container from the outside of said container. After step (g) the inner supply tube part thus forms the outwards of the container extending part of the supply tube and the outer supply tube part forms the inwards in the container extending part of the supply tube.

Step (g) may be performed either manually or automatically. Described herein is also a method for attaching a supply tube to a container, said method comprising the steps of:
(a) providing a supply tube;
(b) providing a container with at least one filling opening;
(c) attaching said supply tube to said container or a material insert thereof, such that said supply tube connects to said filling opening,
wherein in step (a) the supply tube is provided in a folded state, such that said supply tube has two supply tube parts extending in an at least partly overlapping manner from a fold line, wherein one of said supply tube parts is an inner supply tube part extending inside in the other, outer supply tube part;
wherein step (c) is performed by attaching the fold line of said supply tube to said container or said material insert;
and comprising the step of:
(d) pulling the inner supply tube part out of the outer supply tube part.

An advantage of this method according to the invention is that the supply tube may easily be attached to the container or the material insert in the area of the fold line thereof, wherein after attaching the supply tube to the container or the material insert the inner supply tube part may easily be pulled out of the outer supply tube part for forming a supply tube that extends both inwards and outward of said container.

Preferably said supply tube is attached to the container or material insert in such a manner, that in the folded state of the supply tube both supply tube parts extend inwards in said container. The inner supply tube part may then easily be pulled outwards of said container from the outside of said container. After step (d) the inner supply tube part thus forms the outwards of the container extending part of the supply tube and the outer supply tube part forms the inwards in the container extending part of the supply tube.

Step (d) may be performed either manually or automatically.

The invention will be further elucidated with reference to figures shown in a drawing, in which:
Figure 1 is a perspective view of a container according to the invention that is filled with material;
Figures 2A - 2D show the steps of filling the container of figure 1, and
Figures 3A - 3C show steps that are part of a method for producing a container.

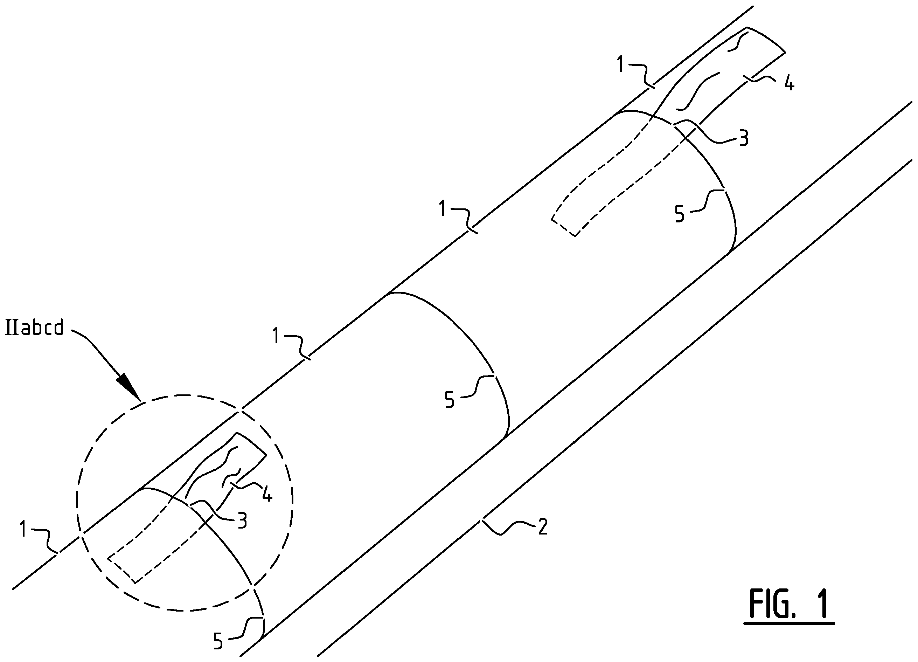

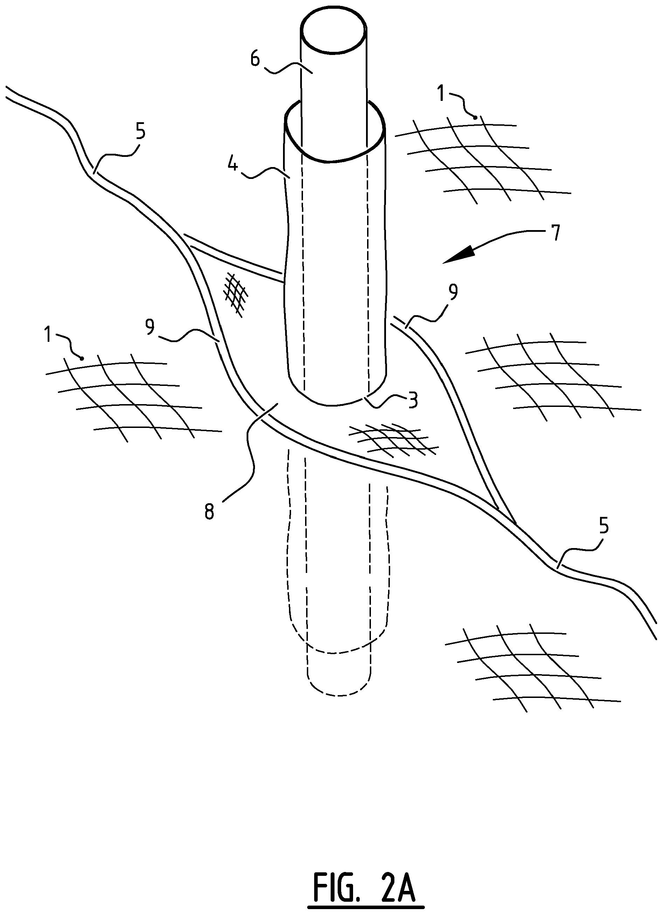

Figure 1 shows an elongate flexible container 1 filled with any suitable material resting on any suitable surface 2. Although the container 1 of figure 1 is drawn with a relatively small length, the container 1 may be a continuous container with any desired length, for example over a hundred meter. Said container comprises a plurality of container parts that are joined to each other over a circumferential seam 5. Said container 1 has, in this example, two filling openings 3 comprising a supply tube 4 connected thereto. The filling openings 3 are arranged between pairs of adjacent container parts by locally not directly joining the two container parts to each other by said circumferential seam 5 in a filling opening area 7, see also figure 2A. In this embodiment a filling opening 3 is provided in every other seam 5 and not in every seam 5. It is noted that any desired number of filling openings, optionally provided with supply tubes, may be provided, with any desired mutual distance there between. As is shown in figure 1, the supply tubes 4 extend both inwards and outwards of said container 1.

The material that is fed to and contained in the container 1 may for example comprise loose or little coherent solid material, such as sand, silt, clay, mud or other ground material. Said material may optionally be fed to said container 1 together with water. Said container 1 is preferably made of a material that is permeable to at least water, such that water fed to said container 1 together with said material may permeate through the container wall, while the material remains in said container 1. The container 1 may be used, for example, for solid liquid separation and/or dewatering and/or consolidation purposes, and, once filled, may be used as a core or base of a dam, or for filling holes or trenches, or as an infill to elevate or renovate sports fields, park meadows or other infrastructure and landscaping elements, or as a quay, a bank reinforcement, a dike, a reclamation dike, a jetty, a breakwater, a tidal energy enclosure structure, or as an off shore storm surge protection structure, e.g. in the bed of a waterway.

Figures 2A - 2D show the steps of filling the container 1 of figure 1 in the detailed view of the container 1 surrounding the filling opening indicated by the circle of figure 1. From these figures it is clear that the filling opening 3 is provided in the circumferential seam 5 between two adjacent container parts by locally not directly joining the two container parts in an area 7. The length of the area 7 may be chosen as desired, thereby choosing the maximum size of the filling opening 3. A material insert 8 is attached to the not directly joined overlapping parts 9 of the container parts in area 7. In said material insert 8 an opening is provided, which opening defines the filling opening 3. Said supply tube 4 is attached to the material insert 8 and connects to the filling opening 3.

In figure 2A the container 1 is shown in an empty condition in which the container 1 lies more or less flat on the surface 2. For filling the container 1 a fill pipe 6 of a filling means may be arranged in said supply tube 4 for feeding a material to said container 1.

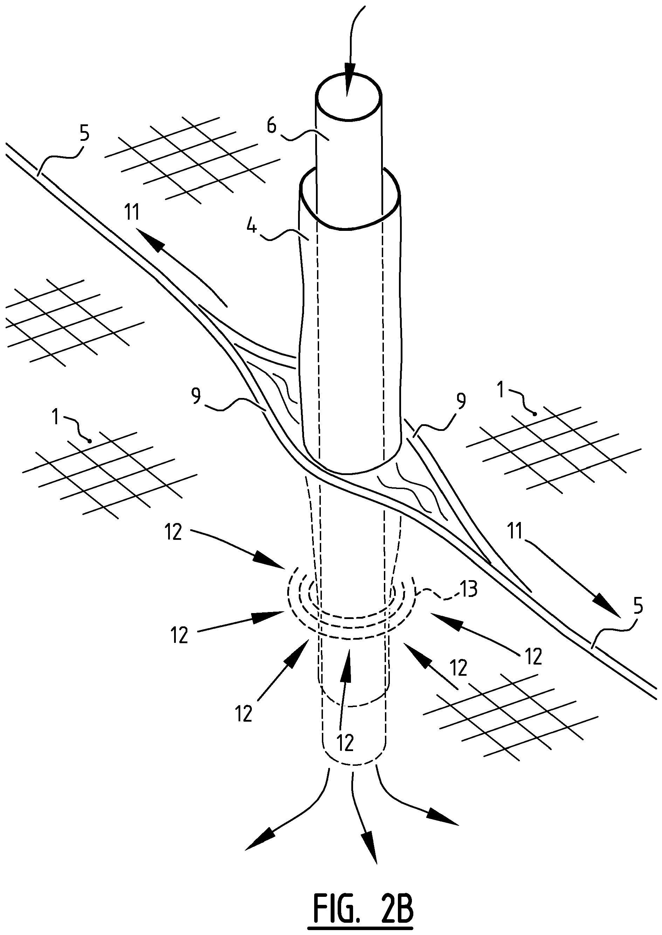

In figure 2B material is fed to the container 1 via the fill pipe 6 of the filling means, wherein the container 1 is shown in a partly filled condition. The level of the material in the container is indicated by reference numeral 13. The material present in the container 1 presses the supply tube 4 against the fill pipe 6 in the direction of arrows 12, such that there is substantially no loss of material out of said container 1 via the supply tube 4. As the fill level of material in the container 1 increases the circumferential tension of the container in direction of arrows 11 increases.

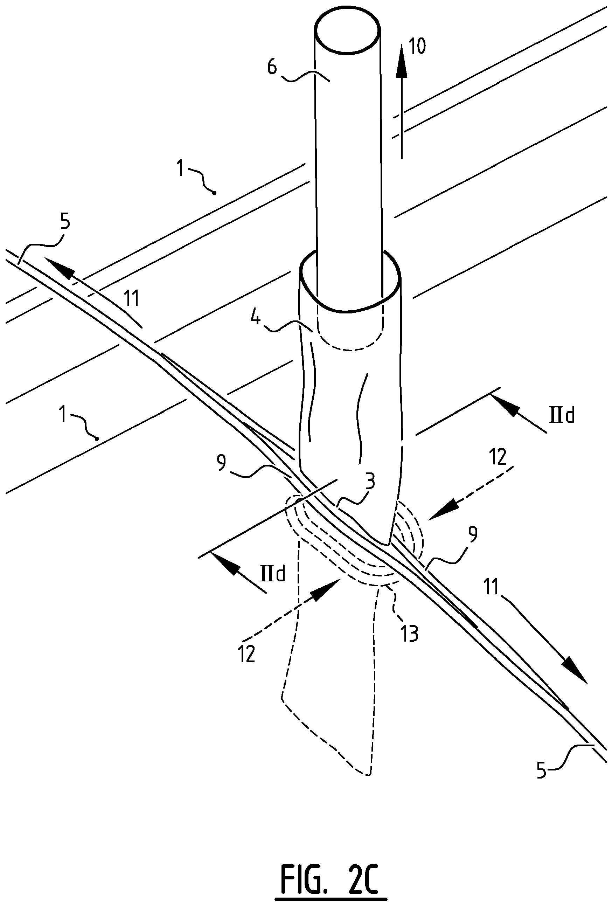

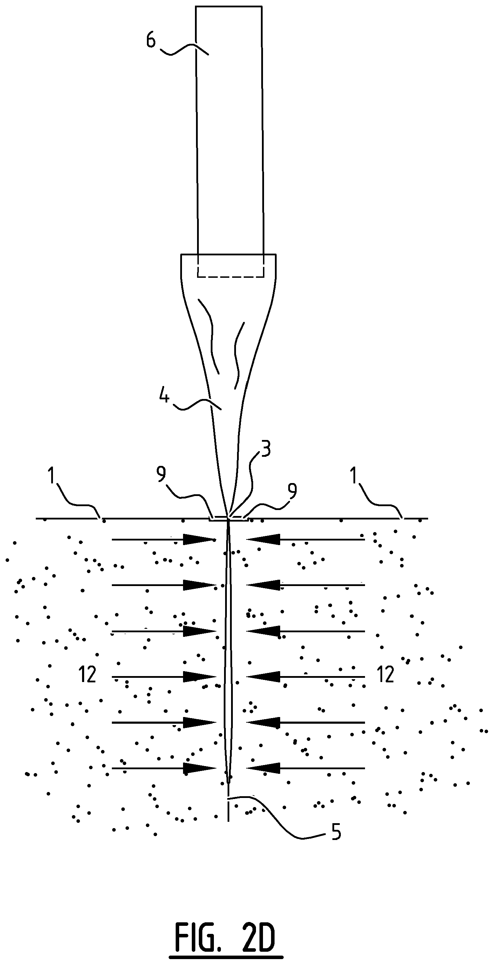

After substantially completely filling the container 1 up to the material fill level 13 the fill pipe 6 may be removed, as is shown in figures 2C and 2D. Upon removal of the fill pipe 6 in an outward direction with respect to the container 1, as indicated by arrow 10, the filling opening 3 will close as a result of the circumferential tension action in the direction of arrows 11. This circumferential tension 11 pulls the two container parts in an outward, transverse direction with respect to the longitudinal direction of the container 1, thereby bringing the two container parts together and at least substantially closing off the filling opening 3. In addition, after filling the container 1 with material and upon removal of the fill pipe 6 of said filling means, the material present in the container 1 at the outside of the supply tube 4 will press against the supply tube 4 in the direction of arrows 12, thereby pressing opposing parts of the supply tube together and thereby closing the supply tube 4. The substantially completely filled container is shown in a perspective view in figure 2C and in a cross sectional view in the longitudinal direction of the container 1 in figure 2D, such that the self closing character of the fill opening 3 and inner supply tube 4 is clearly visible.

It is noted that the fill pipe 6 of the filling means preferably has a smooth outer surface, such that the fill pipe 6 may easily be removed from the container 1 without pulling along the inner supply tube 4.

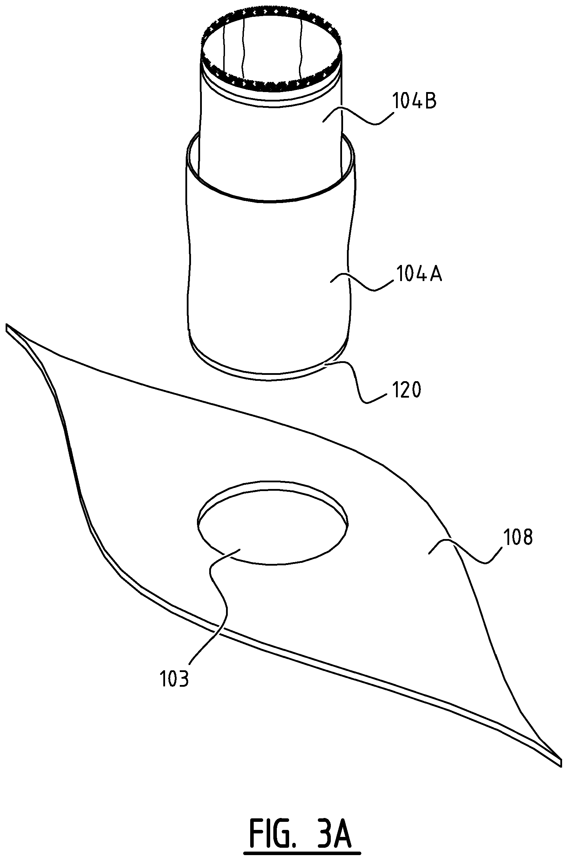

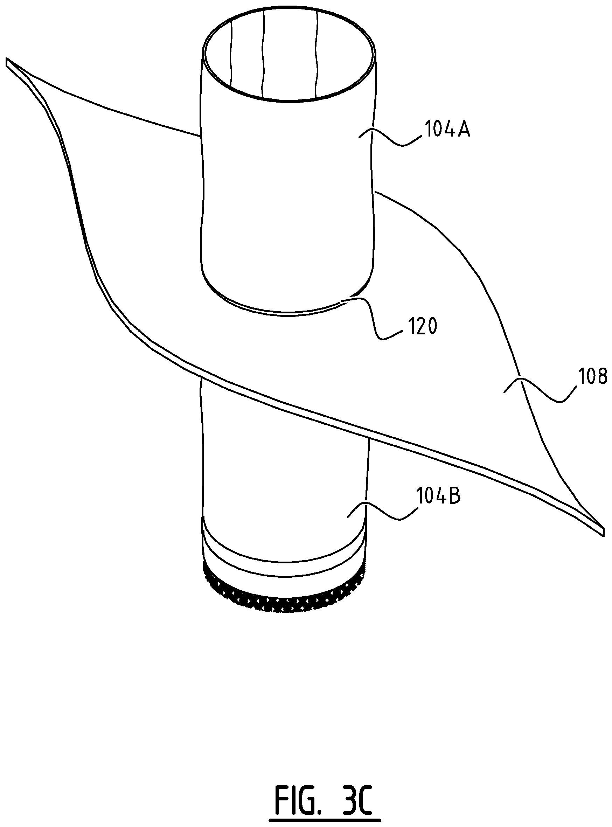

Figures 3A - 3C show a few steps that are part of a method for producing an elongate flexible container, for example a container according to the invention or any other type of container, for example for solid liquid separation and/or dewatering and/or consolidation, said container comprising at least one filling opening for filling the container with a material, for example a material to be separated and/or dewatered and/or consolidated.

In figure 3A a material insert 108 and a supply tube 104A, 104B are shown. The supply tube 104A, 104B is provided in a folded state, such that said supply tube has two supply tube parts extending in an at least partly overlapping manner from a fold line 120, wherein one of said supply tube parts is an inner supply tube part 104B extending inside in the other, outer supply tube part 104A. The material insert 108 comprises a filling opening 103.

In step 3B the supply tube 104A, 104B is attached to the material insert 108 in the area of the fold line 120 thereof in such a manner, that the supply tube 104A, 104B connects to and in particular surrounds the filling opening 103.

After attaching the supply tube 104A, 104B to the material insert 108 the inner supply tube part 104B is pulled out of the outer supply tube part 104A.

It is noted that in figures 3A - 3C the container itself is not shown. Preferably, the material insert 108 and the supply tube 104A, 104B are first joined to each other, wherein after attaching the supply tube 104A, 104B to the material insert 108 the material insert 108 is attached to the container. Preferably the inner supply tube part 104B is pulled out of the outer supply tube part 104A after attaching the material insert 108 to the container.

The material insert 108 is preferably attached to the container in such a manner that both supply tube parts 104A, 104B extend inwards in said container, such that the inner supply tube part 104B may easily be pulled out of the outer supply tube part 104A from the outside of the container. After pulling, the inner supply tube part 104B thus forms the outwards of the container extending part of the supply tube and the outer supply tube part 104A forms the inwards of the container extending part of the supply tube.

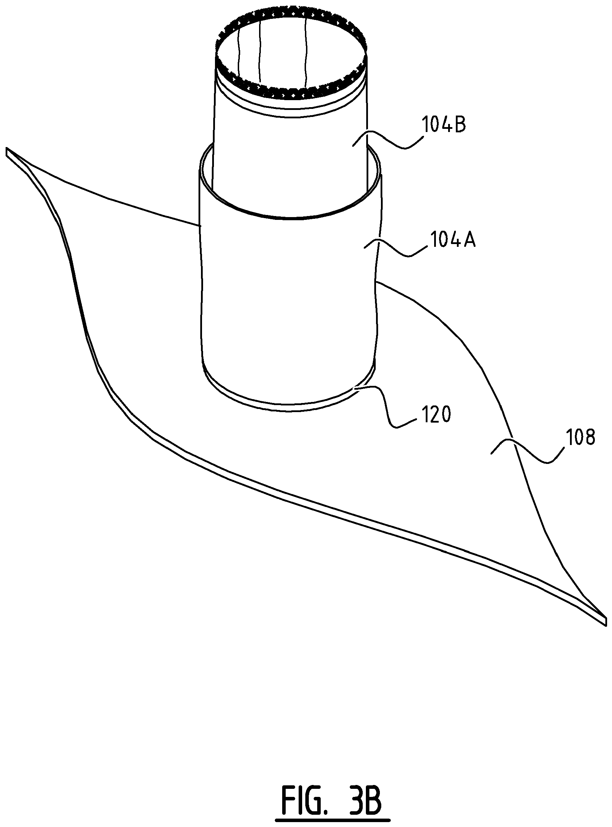

As is clearly visible in figures 3A, 3B, the supply tube part 104A that forms the inwards of the container extending part of the supply tube is shorter than the supply tube part 104B. An advantage of the relatively short inwards extending part of the supply tube is that the risk of unintentionally pulling the inwards extending part of the supply tube outwards of the container when removing the fill pipe of the filling means is reduced.

It is noted that in the embodiment of figures 3A - 3C the material insert 108 resembles the shape of an eye. Such a shape is in particular advantageous for the container according to the invention. If a material insert is provided for any other type of container, the material insert may have any chosen and/or suitable shape, such as, but not limited thereto, round, oval, square, rectangular, or any other polygonal shape.

It is noted that the invention is not limited to the shown embodiments but also extends to variants within the scope of the appended claims.

## Claims

1. Elongate flexible container, for example for solid liquid separation and/or dewatering and/or consolidation, wherein said container is made of a liquid permeable material, and said container comprising at least one filling opening (3) for filling the container with a material, for example a material to be separated and/or dewatered and/or consolidated, **wherein** said container comprises at least two elongate container parts (1) that extend in a longitudinal direction, which container parts (1) are joined to each other over a circumferential seam (5) that extends substantially orthogonal to the longitudinal direction of the container parts (1), and wherein the at least one filling opening (3) is arranged between the two container parts (1) by locally not directly joining the two container parts (1) to each other by said circumferential seam (5) in a filling opening area (7), and in that the container comprises at least one material insert (8) joined to said container parts (1) in said filling opening area (7), said material insert (8) defining said at least one filling opening (3).

2. Container according to claim 1, wherein the two container parts (1) overlap each other over a certain overlapping length and said circumferential seam (5) is provided over said overlapping length.

3. Container according to any of the preceding claims, comprising a supply tube (4) connected to the at least one filling opening (3).

4. Container according to claim 3, wherein the or each supply tube (4) extends inwards and/or outwards of said container.

5. Use of a container according to any of the preceding claims 1 - 4 for solid liquid separation and/or dewatering and/or consolidation.

6. Use according to claim 5, wherein the container is used as a core or base of a dam, or for filling holes or trenches, or as landfill, or as an infill to elevate or renovate sports fields, park meadows or other infrastructure and landscaping elements, or as a quay, a bank reinforcement, a dike, a reclamation dike, a jetty, a breakwater, a tidal energy enclosure structure, or as an off shore storm surge protection structure, e.g. in the bed of a waterway, after filling of the container with said material.

7. Structure, such as a dam, or for filling holes or trenches, or as landfill, or as an infill to elevate or renovate sports fields, park meadows or other infrastructure and landscaping elements, or a quay, a bank reinforcement, a dike, a reclamation dike, a jetty, a breakwater, a tidal energy enclosure structure, or an off shore storm surge protection structure, comprising at least one container according to any of the claims 1-4.

8. Method of using an elongate flexible container according to any of the claims 1-4, for example for solid liquid separation and/or dewatering and/or consolidation, said method comprising the steps of:
(a) providing a container according to any of the claims 1 - 4;
(b) arranging a fill pipe (6) of a filling means in said at least one filling opening (3), and optionally in said supply tube (4);
(c) supplying a flow of material, for example by means of pumping, in said container via said fill pipe (6) of said filling means, and
(d) removing said fill pipe (6) of said filling means.

9. Method according to claim 8, wherein during or after step (d) said at least one filling opening (3) is substantially closed by a circumferential tension in the container.

10. Method according to claim 8 or 9, wherein in step (a) a container of at least claim 3 is provided, and wherein during or after step (d) said supply tube (4) is substantially closed by material present in the container at the outside of an inward extending part of said supply tube (4).

11. Method for producing an elongate flexible container according to any of the claims 1-4, comprising the steps of:
(a) providing at least two elongate container parts (1);
(b) joining said at least two container parts (1) to each other over a circumferential seam (5) while leaving a filling opening (3) between the two container parts (1) by locally not (directly) joining the two container parts (1) to each other by said circumferential seam (5) in a filling opening area (7);
(c) providing at least one material insert (8), which material insert (8) defines said at least one filling opening (3); and
(d) attaching said material insert (8) to said container parts (1) in said filling opening area (7).

12. Method according to claim 11, comprising the further steps of:
(e) providing a supply tube (4);
(f) attaching said supply tube (4) to said container parts (1) or said material insert (8), such that said supply tube (4) connects to said filling opening (3).

13. Method according to claim 12,
wherein in step (e) the supply tube (4) is provided in a folded state, such that said supply tube (4) has two supply tube parts (104A, 104B) extending in an at least partly overlapping manner from a fold line (120), wherein one of said supply tube parts (104B) is an inner supply tube part extending inside in the other, outer supply tube part (104A);
wherein step (f) is performed by attaching the fold line (120) of said supply tube (4) to said container parts (1) or said material insert (8);
and comprising the step of:
(g) pulling the inner supply tube part (104B) out of the outer supply tube part (104A).

## Patentansprüche

1. Länglicher, flexibler Behälter, beispielsweise zur Fest-Flüssig-Trennung und/oder Entwässerung und/oder Verfestigung, wobei der Behälter aus einem flüssigkeitsdurchlässigen Material hergestellt ist und der Behälter mindestens eine Einfüllöffnung (3) zum Befüllen des Behälters mit einem Material, beispielsweise einem zu trennenden und/oder zu entwässernden und/oder zu verfestigenden Material, umfasst, wobei der Behälter mindestens zwei längliche Behälterteile (1) umfasst, die sich in einer Längsrichtung erstrecken, wobei die Behälterteile (1) über einen Umfangssaum (5) miteinander verbunden sind, der sich im Wesentlichen orthogonal zur Längsrichtung des Behälterteils (1) erstreckt, und wobei die mindestens eine Einfüllöffnung (3) zwischen den zwei Behälterteilen (1) durch lokales, nicht direktes miteinander Verbinden der zwei Behälterteile (1) durch den Umfangssaum (5) in einem Einfüllöffnungsbereich (7) angeordnet ist, und dadurch, dass der Behälter mindestens einen Materialeinsatz (8) aufweist, der mit den Behälterteilen (1) in dem Einfüllöffnungsbereich (7) verbunden ist, wobei der Materialeinsatz (8) die mindestens eine Einfüllöffnung (3) definiert.

2. Behälter nach Anspruch 1, wobei die zwei Behälterteile (1) sich gegenseitig über eine bestimmte Überlappungslänge überlappen und der Umfangssaum (5) über die überlappende Länge bereitgestellt ist.

3. Behälter nach einem der vorhergehenden Ansprüche, umfassend einen Zuführschlauch (4), der mit der mindestens einen Einfüllöffnung (3) verbunden ist.

4. Behälter nach Anspruch 3, wobei sich der oder jeder der Zuführschläuche (4) sich nach innen und/oder aus dem Behälter heraus erstreckt.

5. Verwendung eines Behälters nach einem der vorhergehenden Ansprüche 1 - 4, zur Fest-Flüssig-Trennung und/oder Entwässerung und/oder Verfestigung.

6. Verwendung nach Anspruch 5, wobei der Behälter als Kern oder Basis eines Dammes oder zum Füllen von Löchern oder Gräben als Aufschüttung oder als Verfüllung zur Erhöhung oder Renovierung von Sportplätzen, Parkwiesen oder anderen Infrastruktur- und Landschaftsbauelementen oder als ein Kai, eine Uferbefestigung, ein Deich, ein Rekultivierungsdeich, eine Mole, ein Wellenbrecher, eine Gezeitenenergieeinhausungsstruktur oder als eine Offshore-Sturmflut-Schutzstruktur, beispielsweise in der Sole einer Wasserstraße, nach der Befüllung des Behälters mit Material, verwendet wird.

7. Struktur, wie ein Damm oder zum Füllen von Löchern oder Gräben oder als Aufschüttung oder als Auffüllung zur Erhöhung oder zur Renovierung von Sportplätzen, Parkwiesen oder anderen Infrastruktur- und Landschaftsbauelementen oder ein Kai, eine Uferbefestigung, ein Deich, ein Rekultivierungsdeich, eine Mole, ein Wellenbrecher, eine Gezeitenenergieeinhausungsstruktur oder eine Offshore-Sturmflut-Schutzstruktur, umfassend mindestens einen Behälter nach einem der Ansprüche 1 - 4.

8. Verfahren zur Verwendung eines länglichen, flexiblen Behälters nach einem der Ansprüche 1 - 4, beispielsweise zur Fest-Flüssig-Trennung und/oder Entwässerung und/oder Verfestigung, wobei das Verfahren die Schritte umfasst:
(a) Bereitstellen eines Behälters nach einem der Ansprüche 1 - 4;
(b) Anordnen eines Füllrohrs (6) eines Füllmittels in der mindestens einen Einfüllöffnung (3), und
optional in dem genannten Zuführschlauch (4);
(c) Zuführen eines Materialstroms, beispielsweise durch Mittel zum Pumpen, in den Behälter über das Füllrohr (6) des Füllmittels, und
(d) Entfernen des Füllrohrs (6) des Füllmittels.

9. Verfahren nach Anspruch 8, wobei während oder nach dem Schritt (d), die mindestens eine Einfüllöffnung (3) im Wesentlichen durch eine Umfangsspannung im Behälter geschlossen wird.

10. Verfahren nach Anspruch 8 oder 9, wobei im Schritt (a) ein Behälter zumindest nach Anspruch 3 bereitgestellt wird und wobei während oder nach Schritt (d) der Zuführschlauch (4) im Wesentlichen durch ein Material geschlossen wird, das in dem Behälter an der Außenseite eines sich innenseitig erstreckenden Teils des Zuführschlauchs (4) anwesend ist.

11. Verfahren zum Erzeugen eines länglichen flexiblen Behälters nach einem der Ansprüche 1 - 4, umfassend die Schritte:
(a) Bereitstellen von mindestens zwei länglichen Behälterteilen (1);
(b) Verbinden der mindestens zwei Behälterteile (1) miteinander über einen Umfangssaum (5), während eines Freilassens einer Einfüllöffnung (3) zwischen den zwei Behälterteilen (1) durch lokales, nicht (direktes) Verbinden der zwei Behälterteile (1) miteinander durch den Umfangssaum (5) in einem Einfüllöffnungsbereich (7);
(c) Bereitstellen mindestens eines Materialeinsatzes (8), wobei der Materialeinsatz (8) die mindestens eine Einfüllöffnung (3) definiert; und
(d) Verbinden des Materialeinsatzes (8) mit den Behälterteilen (1) in dem Einfüllöffnungsbereich (7).

12. Verfahren nach Anspruch 11, umfassend die weiteren Schritte
(e) Bereitstellen eines Zuführschlauchs (4);
(f) Anbringen des Zuführschlauchs (4) an den Behälterteilen (1) oder dem Materialeinsatz (8), so dass der Zuführschlauch (4) mit der Einfüllöffnung (3) verbunden wird.

13. Verfahren nach Anspruch 12, wobei in Schritt (e) der Zuführschlauch (4) in einem gefalteten Zustand bereitgestellt ist, so dass der Zuführschlauch (4) zwei Zuführschlauchteile (104A, 104B) aufweist, die sich in zumindest teilweise überlappender Weise von einer Faltlinie (120) aus erstrecken,
wobei einer der Zuführschlauchteile (104B) ein innerer Zuführschlauchteil ist, der sich innerhalb des anderen, äußeren Zuführschlauchteils (104A) erstreckt;
wobei Schritt (f) ausgeführt wird durch Anbringen der Faltlinie (120) des Zuführschlauchs (4) an den Behälterteilen (1) oder dem Materialeinsatz (8);
und umfassend den Schritt:
(g) Ziehen des inneren Zuführschlauchteils (104B) heraus aus dem äußeren Zuführschlauchteil (104A).

## Revendications

1. Récipient flexible allongé, par exemple pour une séparation solide/liquide et/ou une déshydratation et/ou une consolidation, dans lequel ledit récipient est réalisé en un matériau perméable aux liquides, et ledit récipient comprenant au moins une ouverture de remplissage (3) pour remplir le récipient avec un matériau, par exemple un matériau à séparer et/ou déshydrater et/ou consolider, dans lequel ledit récipient comprend au moins deux parties de récipient allongées (1) qui s'étendent dans une direction longitudinale, lesquelles parties de récipient (1) sont jointes l'une à l'autre sur une jonction circonférentielle (5) qui s'étend sensiblement orthogonalement à la direction longitudinale des parties de récipient (1), et dans lequel la au moins une ouverture de remplissage (3) est agencée entre les deux parties de récipient (1) en ne joignant pas localement directement les deux parties de récipient (1) l'une à l'autre via ladite couture circonférentielle (5) dans une zone d'ouverture de remplissage (7), et en ce que le récipient comprend au moins un insert de matériau (8) joint auxdites parties de récipient (1) dans ladite zone d'ouverture de remplissage (7), ledit insert de matériau (8) définissant ladite au moins une ouverture de remplissage (3).

2. Récipient selon la revendication 1, dans lequel les deux parties de récipient (1) se chevauchent sur une certaine longueur de chevauchement et ladite jonction circonférentielle (5) est prévue sur ladite longueur de chevauchement.

3. Récipient selon l'une quelconque des revendications précédentes, comprenant un tube d'alimentation (4) relié à la au moins une ouverture de remplissage (3).

4. Récipient selon la revendication 3, dans lequel le ou chaque tube d'alimentation (4) s'étend vers l'intérieur et/ou vers l'extérieur dudit récipient.

5. Utilisation d'un récipient selon l'une quelconque des revendications précédentes 1 à 4 pour une séparation solide/liquide et/ou une déshydratation et/ou une consolidation.

6. Utilisation selon la revendication 5, dans laquelle le conteneur est utilisé comme noyau ou base d'un barrage, ou pour remplir des trous ou des tranchées, ou comme remblai, ou comme élément de remplissage pour élever ou rénover des terrains de sport, des près de parc ou d'autres infrastructures et éléments d'aménagement paysager, ou comme quai, renfort de berge, digue, digue de remise en état, jetée, brise-lames, structure d'enceinte d'énergie marémotrice ou comme structure de protection contre les ondes de tempête en mer, par exemple dans le lit d'une voie navigable, après remplissage du récipient avec ledit matériau.

7. Structure, comme un barrage, ou pour remplir des trous ou des tranchées, ou comme remblai, ou comme élément de remplissage pour élever ou rénover des terrains de sport, des près de parc ou d'autres infrastructures et éléments d'aménagement paysager, ou comme quai, renfort de berge, digue, digue de remise en état, jetée, brise-lames, structure d'enceinte d'énergie marémotrice ou comme structure de protection contre les ondes de tempête en mer, comprenant au moins un conteneur selon l'une quelconque des revendications 1 à 4.

8. Méthode d'utilisation d'un récipient selon l'une quelconque des revendications précédentes 1 à 4 par exemple pour une séparation solide/liquide et/ou une déshydratation et/ou une consolidation, ladite méthode comprenant les étapes consistant à :
(a) fournir un récipient selon l'une quelconque des revendications 1 à 4 ;
(b) agencer un tuyau de remplissage (6) d'un moyen de remplissage dans ladite au moins une ouverture de remplissage (3), et
facultativement dans ledit tube d'alimentation (4) ;
(c) alimenter un flux de matériau, par exemple au moyen d'un pompage, dans ledit récipient via ledit tuyau de remplissage (6) desdits moyens de remplissage, et
(d) retirer ledit tuyau de remplissage (6) desdits moyens de remplissage.

9. Méthode selon la revendication 8, dans laquelle pendant ou après l'étape (d), ladite au moins une ouverture de remplissage (3) est sensiblement fermée par une tension circonférentielle dans le récipient.

10. Méthode selon la revendication 8 ou 9, dans laquelle à l'étape (a), un récipient d'au moins la revendication 3 est prévu, et dans lequel pendant ou après l'étape (d) ledit tube d'alimentation (4) est sensiblement fermé par du matériau présent dans le récipient au niveau de l'extérieur d'une partie s'étendant vers l'intérieur dudit tube d'alimentation (4).

11. Méthode de production d'un récipient flexible allongé selon l'une quelconque des revendications 1 à 4, comprenant les étapes consistant à :
(a) prévoir au moins deux parties de récipient allongées (1) ;
(b) joindre lesdites au moins deux parties de récipient (1) l'une à l'autre sur une jonction circonférentielle (5) tout en laissant une ouverture de remplissage (3) entre les deux parties de récipient (1) en ne joignant pas localement (directement) les deux parties de récipient (1) l'une à l'autre par ladite jonction circonférentielle (5) dans une zone d'ouverture de remplissage (7) ;
(c) fournir au moins un insert de matériau (8), lequel insert de matériau (8) définit ladite au moins une ouverture de remplissage (3) ; et
(d) fixer ledit insert de matériau (8) auxdites parties de récipient (1) dans ladite zone d'ouverture de remplissage (7).

12. Méthode selon la revendication 11, comprenant les étapes supplémentaires consistant à :
(e) fournir un tube d'alimentation (4) ;
(f) fixer ledit tube d'alimentation (4) auxdites parties de récipient (1) ou audit insert de matériau (8), de sorte que ledit tube d'alimentation (4) se connecte à ladite ouverture de remplissage (3).

13. Méthode selon la revendication 12,
dans laquelle à l'étape (e), le tube d'alimentation (4) est prévu dans un état plié, de telle sorte que ledit tube d'alimentation (4) a deux parties de tube d'alimentation (104A, 104B) s'étendant d'une manière au moins partiellement en chevauchement à partir d'une ligne de pliage (120), dans laquelle l'une desdites parties de tube d'alimentation (104B) est une partie de tube d'alimentation interne s'étendant à l'intérieur de l'autre partie de tube d'alimentation externe (104A) ;
dans lequel l'étape (f) est effectuée en fixant la ligne de pliage (120) dudit tube d'alimentation (4) auxdites parties de récipient (1) ou audit insert de matériau (8) ;
et comprenant l'étape consistant à :
(g) tirer la partie de tube d'alimentation interne (104B) hors de la partie de tube d'alimentation externe (104A).
